# EUROPEAN PATENT SPECIFICATION

(11) **EP 4 024 101 B1**
(45) Date of publication and mention of the grant of the patent: **14.08.2024**
(21) Application number: 19945932.2
(22) Date of filing: 16.09.2019
(51) Int. Cl.: G02B 6/255, G02B 6/25

(54) **OPTICAL FIBER FUSION SPLICER**
GLASFASERFUSIONSSPLEISSER
DISPOSITIF D'ÉPISSAGE PAR FUSION DE FIBRES OPTIQUES

(43) Date of publication of application: 06.07.2022
(73) Proprietor: Signal Fire Technology Co., Ltd., Chengdu, Sichuan 610015 (CN)
(72) Inventor: LUO, Chunhui, Chengdu, Sichuan 610000 (CN)
(74) Representative: Lermer, Christoph
(86) International application number: PCT/CN2019/105954
(87) International publication number: WO 2021/051234

(56) References cited:
- CN-A- 105 974 519
- CN-U- 203 414 620
- CN-U- 207 164 303
- CN-U- 207 281 328
- JP-A- H05 224 024
- JP-A- S62 223 708
- US-A- 5 999 682

## Description

### Technical Field

The present invention relates to an optical fiber fusion splicer.

### Background Art

Existing portable fiber fusion splicers can fuse two stripped and cut optical fibers. For example, the optical fiber fusion splicers disclosed in U.S. Patent No. US 2017/242193 A1 or Chinese Patent No. CN 103529516 B fuse two stripped and cut optical fibers. However, when such a fusion splicer is used, it is necessary to cut the end of the optical fiber first and then put it into the fiber fusion splicer. As the quality of fiber ends has a significant impact on fiber communications, cutting fiber ends typically requires the use of a separate tool. This mode of operation is less efficient when large batches of fibers need to be fused.

In order to solve this problem, VYTRAN LLC in the United States has proposed a systematic solution, which uses a cabinet with a station on the upper surface of the cabinet; a plurality of modules with different processing functions inside the cabinet can successively move to the station position and extend out of the station; and clamping parts for optical fibers are provided on both sides of the station, the clamping parts clamp the optical fibers to reciprocate and the corresponding modules extend out of the station successively to process the optical fibers. This system is bulky and not suitable for on-site transferring.

Chinese utility model patent CN 202563119 U also discloses a cutting and positioning type optical fiber fusion splicer, which can cut an optical fiber and then complete the fusion of the optical fiber by discharging and pushing the end face. The utility model eliminates the need for a separate cutting knife and simplifies the fusion welding structure. However, the optical fiber cutting structure of the optical fiber fusion splicer of the utility model structure does not form a good cutting effect, thereby reducing the quality of the fused optical fiber US 5999682 A concerns a tool for carrying out all the operations for end-to end joining a fiber either to another fiber or to an optical connector member.

JP 562223708 A reduces the horizontal carriage of an optical fiber core as less as possible by successively driving a carrying board to be optionally moved in the axial direction of the optical fiber core and a coat removing/fusion splicing process mechanism to be optionally moved in the direction rectangular to said moving direction.

CN 207281328 U discloses a weld holder to be used for optic fibre welded.

JP H05224024 A provides a scalping device for small-sized coated optical fibers which does not occupy a space in a direction where the coated optical fibers to be connected are supplied.

### Summary of the Invention

In view of the problems existing in the prior art, it is an object of the present invention to provide an optical fiber fusion splicer capable of integrating the functions of cutting and fusion splicing, having a compact structure and a good fusion splicing effect.

In order to achieve the above object, the technical solutions adopted by the invention are as follows. An optical fiber fusion splicer comprises a working platform and a fusion splicing part provided on the working platform, wherein the fusion splicing part can splice optical fibers, wherein the optical fiber fusion splicer further comprises:
a first clamping part respectively provided on either side of the fusion splicing part, wherein the first clamping parts can clamping optical fibers and move in the lengthwise direction of the optical fibers;
a cutting part respectively provided on either side of the fusion splicing part, wherein the cutting parts is arranged between the first clamping parts and the fusion splicing part and provided with cutting blades and second clamping parts;
wherein the cutting parts can move, so that the cutting parts withdraw from positions between the first clamping parts and the fusion splicing part.

The second clamping part of each of the cutting parts comprises a second fixed part and a second moving part, wherein each of the cutting parts is provided with a driving part, which drives the cutting blade to move towards or away from the second fixed part; the cutting blade is connected to the second moving part via an elastic part; when the elastic part is in an extended state, the second moving part is closer to the position where the optical fiber is located than the cutting blade; and when the elastic part is compressed and contracted as the second moving part is in contact with the second fixed part, the cutting blade can continue to move towards the position where the optical fiber is located so as to contact the optical fiber.

Some preferred embodiments of the invention are as follows:
Preferably, the direction of movement of the cutting part is perpendicular to the length direction of the optical fiber.

Preferably, when the second clamping part clamps the optical fiber, the first clamping part moves in the direction away from the splicing part, so that the optical fiber stretches and a tensile stress is applied on the optical fiber; and then the cutting blade moves to the position where the optical fiber is located for cutting.

Preferably, the cutting blade is in the shape of a disc, which is rotatable about the disc axis when driven by a motor.

Preferably, the cutting part is mounted on a second machine frame which is driven towards or away from the position of the optical fiber by a second driving component; and the second driving component has a greater feed rate than that of the driving component.

Preferably, the motor drives and rotates the cutting blade via a belt pulley.

Preferably, the driving component and the second driving component comprises a drive gear and a gear rack cooperating therewith.

Preferably, the first clamping part comprises:
a clamping element for clamping optical fibers;
a moving support on which the clamping element is mounted, wherein the moving support can move towards or away from the fusion splicing part; and
a third driving component for driving the moving support to move.

Preferably, the clamping element can move towards or away from the fusion splicing part with respect to the moving support; and an elastic element is provided between the clamping element and the moving support.

Preferably, the clamping element can move towards or away from the fusion splicing part with respect to the moving support; a fourth driving component for driving the clamping element to move is also fixed to the moving support; and the fourth driving component has a smaller feed rate than that of the third driving component.

Preferably, the clamping element is mounted on the moving support by means of a sliding block; the clamping element is hinged on the sliding block; a fifth driving component and a cam driven by the fifth driving component are further mounted on the sliding block; the cam is in contact with a lower surface of the clamping element; and a return spring is further mounted between the clamping element and the sliding block.

Preferably, the clamping element is mounted on the moving support by the sliding block; an elastic element is provided between the sliding block and the moving support; a fourth driving component for driving the movement of the sliding block is further fixed on the moving support; the fourth driving component has a smaller feeding amount than that of the third driving component; and the fourth driving component can be in contact with or separated from the sliding block and is used for driving the movement of the sliding block when the fourth driving component is in contact with the sliding block.

Preferably, the fourth driving component comprises a motor and a lead screw transmission mechanism driven by the motor; and a free end of the lead screw transmission mechanism can come into contact with the sliding block.

Preferably, an automatic fiber stripping device is further mounted on the working platform.

Preferably, the driving component for the first clamping part, the cutting part and the fusion splicing part are a stepper motor; a control end of the stepper motor is connected to a microprocessor which performs the following steps:
clamping the optical fibers by the second clamping part;
moving the first clamp part by a predetermined distance in a direction away from the fusion splicing part;
feeding the cutting blade to cut the optical fibers;
moving the cutting part out between the first clamping part and the fusion splicing part;
feeding by the first clamping part to place the cut optical fibers into the fusion splicing part; and performing optical fiber position adjustment and fusion splicing by the fusion splicing part.

Preferably, a second U-shaped frame is provided on the second fixed part; a first U-shaped frame is provided on the second moving part; the first U-shaped frame and the second U-shaped frame are arranged such that the clamping surface of a second moving component can pass through the second U-shaped frame and the first U-shaped frame can pass through the clamping surface of the second fixed part when the second moving component moves.

An advantageous effect of the present invention is that the optical fiber fusion splicer can achieve the functions of cutting optical fibers and fusion splicing, and has a compact structure. The working platform can be made in the size of about 40CM X 60CM, which is easy to be carried on the spot. In addition, in some preferred embodiments of the present invention, there are advantages of high cutting efficiency, and good cutting and splicing quality. The advantages of the present invention will be further described with reference to specific embodiments.

### Brief Description of the Drawings

Fig. 1 is a schematic view of an embodiment of the present invention.
Figure 2 is a schematic view of one implementation of a cutting part according to an embodiment of the present invention.
Figs. 3 to 5 are schematic views of one implementation of a first clamping part according to an embodiment of the present invention.
Fig. 6 is a schematic view of one implementation of a fusion splicing part according to an embodiment of the present invention.
Figs. 7 to 14 are schematic views showing different states of an optical fiber fusion splicer according to an embodiment of the present invention during fusion splicing.
Fig. 15 is a partial view of the cutting part shown in Fig. 2.

### Detailed Description

Reference will now be made in detail to various embodiments of the invention, examples of which are illustrated in the accompanying drawings. While the invention will be described in conjunction with the following embodiments, it will be understood that they are not intended to limit the invention to these embodiments. On the contrary, the invention is intended to cover alternatives, modifications and equivalents, which lie within the scope of the invention as defined by the claims. Furthermore, in the following detailed description, numerous specific details are set forth in order to provide a thorough understanding of the present invention. However, it will be apparent to one skilled in the art that the present invention may be practiced without these specific details. In other instances, well-known methods, procedures, components, and materials have not been described in detail so as not to unnecessarily obscure aspects of the present invention.

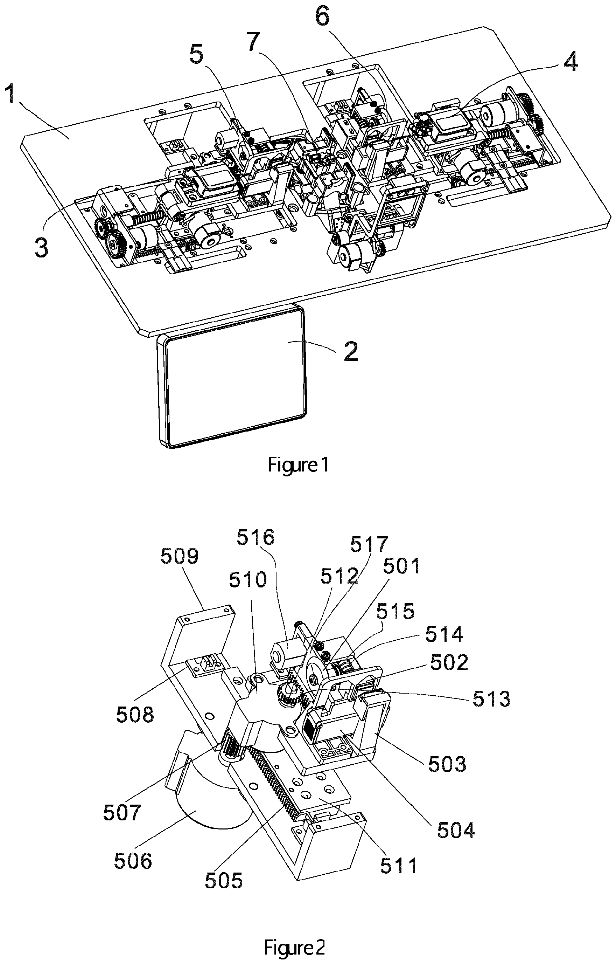

In the present invention, as shown in Fig. 1, an optical fiber fusion splicer includes a work platform 1 and a fusion splicing part 7 provided on the working platform 1. The fusion splicing part 7 may take the same structure as existing fusion splicers. It is capable of electrical discharge cleaning the surface of the optical fibers, then fine-tuning the position of the optical fibers, and finally electrical discharge splicing the optical fibers together. On the working platform 1, a first clamping part 3 is provided on the left side of the fusion splicing part 7; a first clamping part 4 is provided on the right side of the fusion splicing part 7; and the first clamping part 3 and the first clamping part 4 are symmetrically arranged on the left and right with respect to the fusion splicing part 7 and have the same structure. The first clamping parts 3 and 4 can clamp the optical fibers and move along the length direction of the optical fibers. The optical fiber fusion splicer of this embodiment also has a control processor and a human-computer interaction device 2 for controlling the movement of the components to complete the fiber cutting and splicing process.

A cutting part 5 is provided on the left side of the fusion splicing part 7; a cutting part 6 is provided on the right side of the fusion splicing part 7; and the cutting part 5 and the cutting part 6 are symmetrically provided with respect to the fusion splicing part 7 and have the same structure. In addition, the cutting part 5 is located between the first clamping part 3 and the fusion splicing part 7; and the cutting part 6 is located between the first clamping part 4 and the fusion splicing part 7. Since the structures of the cutting parts 5, 6 are the same or similar, only the structure of the cutting part 5 is described in this embodiment; and the cutting part 6 may has the same or similar structure as that of the cutting part 5. The cutting part 5 has a cutting blade 501 and a second clamping part, which is located between the cutting blade 501 and the fusion splicing part 7, as shown in Fig. 2. The second clamping part includes a second fixed part 503 and a second moving part 502, wherein the second moving part 502 can move relative to the second fixed part 503 to clamp or loosen the optical fibers. The cutting parts 5, 6 can be moved out of position between the first clamping parts 3, 4 and the fusion splicing part 7.

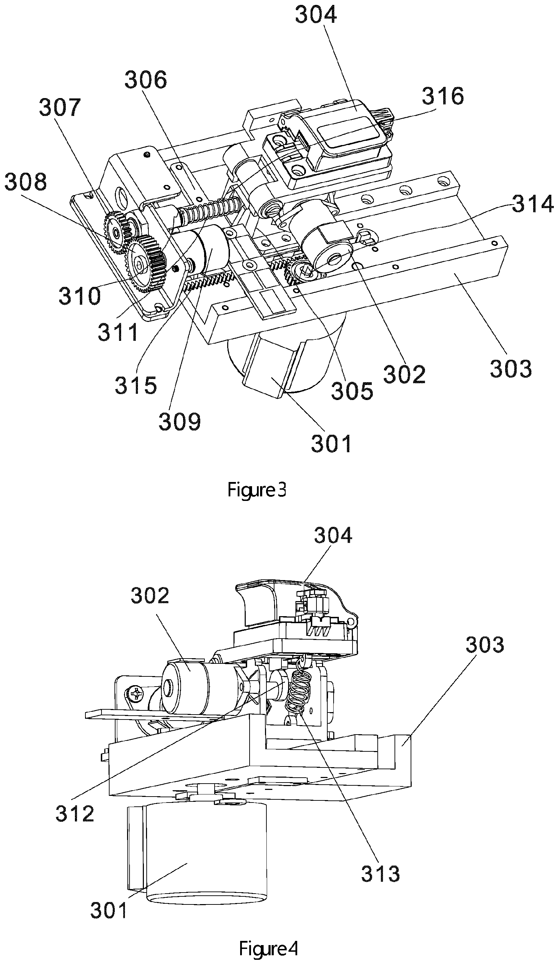

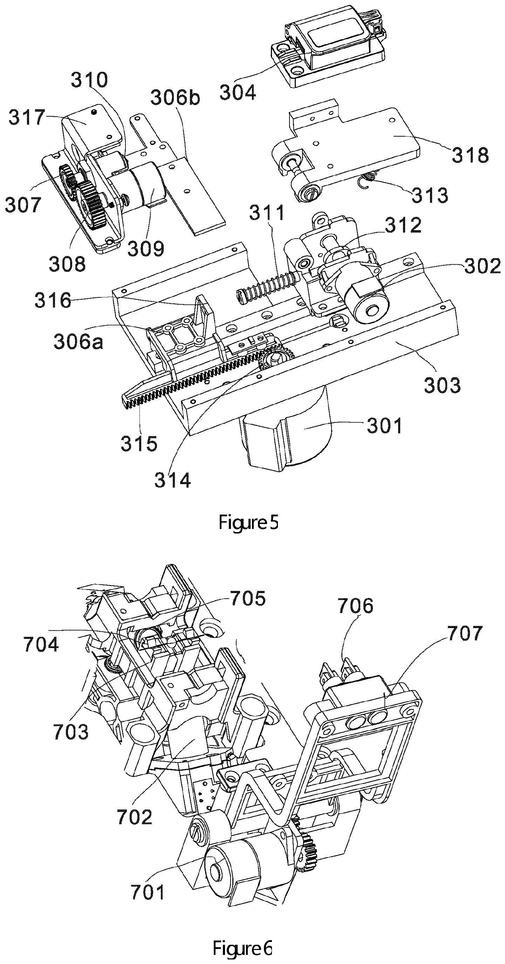

In some embodiments of the invention, the first clamping part 3, as shown in Figs. 3 and 4, includes a machine frame 303, which is mounted on the working platform 1. A through hole is formed on the bottom surface of the machine frame 303; a motor 301 is mounted below the machine frame 303; the shaft of the motor 301 passes through the through hole on the bottom surface of the machine frame 303; and a gear 314 is mounted on the shaft of the motor 301, the gear 314 being located above the upper surface of the machine frame 303. A gear rack 315 cooperating with the gear 314 is arranged along the length direction of the optical fiber, and is driven to reciprocate by the gear 314. A support 306 is fixed to the gear rack 315 (in some embodiments, the gear rack 315 and a first portion 306a of the support may be integrally formed; and a second portion 306b of the support may be a circuit board that may be used to mount an interface or part of a control circuit). The support 306 is provided with a boss 316 having a through hole along the length of the optical fiber. A sliding block 305 is also provided on the machine frame 303, which can slide on the machine frame 303; and a fiber clamping part 304 is mounted on the sliding block 305. A rod 311 is also provided on the sliding block 305 on the side of the sliding block 305 remote from the fusion splicing part 7 and extends in the length direction of the optical fiber in the direction away from the fusion splicing part 7. The rod 311 passes through a through hole in the boss 316; and a spring or other elastic member (e. g. an elastic washer, a snap ring, etc.) is provided between the rod 311 and the boss. As shown in FIG. 5, the support 306 includes a first portion 306a and a second portion 306b, which are assembled together by screws to form the support 306. A vertical mounting plate 317 is also provided on the support 306 and mounted with a big gear 308 and a pinion 307 engaged therewith, the big gear 308 being driven by a stepper motor 309. The pinion 307 drives a lead screw 310, which can contact an end of the rod 311; when the rod 311 needs to be finely adjusted, the lead screw 310 pushes the rod 311 forward for fine adjustment; and when the lead screw 310 retreats, the rod 311 keeps in contact with the lead screw 310 for fine adjustment with the drive by the elastic element.

In this embodiment, in the process of cutting an optical fiber, when the second clamping part 5 and the fiber clamping part 304 clamp the optical fibers, the clamping state can be sensed by a sensor, and the control system can be notified; the driving motor 301 drives the gear 314 to rotate, and drives the gear rack 315 to move to the left away from the fusion splicing part 7; the gear rack 315 drives the support 306 to move to the left; and the boss on the support 306 pulls the rod 311 to the left via the spring. Since the optical fibers are clamped by the second clamping part 5 and the clamping part 304, the length of the optical fibers between the two is constant; and during the retraction of the support 306, the spring on the rod 311 is compressed, thereby forming a certain stress on the optical fibers and facilitating the cutting to form a good cutting port.

In some embodiments, as shown in Figs. 5 and 4, the first clamping part further comprises a mounting platform 318 mounted on the sliding block 305, the mounting platform 318 being hinged to the sliding block 305. The clamping part 304 is mounted on the mounting platform 318 and, together with the mounting platform 318, constitutes a clamping element. A motor 302 is also mounted on the sliding block 305; the shaft of the motor 302 drives a cam 312 to rotate; the edge of the cam 312 is in contact with the bottom surface of the mounting platform 318; and a return spring 313 is mounted between the mounting platform 318 and the sliding block 305. The cam 312 cooperates with the spring 313 to control the tilt angle of the mounting platform 318 so as to adjust the angle of the fiber in the clamping part 304 for placing the fiber end into a V-groove in the fusion splicing part 7.

In other embodiments, as shown in Fig. 2, the cutting part 5 comprises a machine frame 509 for being mounted on the working platform 1. A motor 506 is mounted on the bottom of the machine frame 509, and the motor shaft rotates the gear 507. The gear rack 505 meshes with the gear 507 and is arranged in a direction perpendicular to the length direction of the optical fiber. A second machine frame 511 is fixed to the gear rack 505, and a motor 510 is mounted on the second machine frame 511. The shaft of the motor 510 is provided with a gear 512 which meshes with a gear rack 513 arranged in the same direction as the rack 505. A third machine frame 517 is fixed to the gear rack 513, and the third machine frame 517 can reciprocate with the gear rack 513. A motor 516 is mounted on the third machine frame 517, and the motor 516 is used for driving the cutting blade 501 to rotate; a through hole is further provided on the third machine frame 517; one end of a rod 514 passes through the through hole, and the other end of the rod 514 is fixedly connected to the second moving part 502; the second moving part 502 is mounted on the second machine frame 511 via the sliding block; and a spring 515 or other elastic element is provided between the second moving part 502 and the third machine frame 517. A second fixed part 503 cooperating with the second moving part 502 is further provided on the second machine frame 511; and the cooperation of the second fixed part 503 and the second moving part 502 serves to clamp the optical fibers. In this embodiment, the cutting process is as follows: the control system firstly detects that the position of the second machine frame is at an initial position (the second machine frame 511 is located at one side close to the second fixed part 503; and if the second machine frame 511 is not at the initial position, the second machine frame is driven to the initial position by the motor 506), and places the optical fiber into the first clamping part; after the optical fiber is placed into the first clamping part 3, the clamping state is sensed by the sensor; the controller instructs the motor 510 to rotate, and the third machine frame 517 is pushed forward (towards the direction in which the optical fibers are located) via the gear rack 513; the cutting blade 501 mounted on the third machine frame 517 and the second moving part 502 driven by a spring 515 or other elastic elements are provided between the third machine frame 517 to move forward at the same time; when the second moving part 502 contacts with the second fixed part 503 to clamp the optical fibers, the second moving part 502 stops moving forward, and the third machine frame 517 continues to move forward; the rod 514 mounted with the second moving part 502 moves outward through the through hole, and the spring 515 is compressed; the third machine frame 517 drives the cutting blade 501 to move forward, and the cutting blade 501 is driven to rotate by a motor 516, and approach the optical fibers along with the machine frame 517; and the optical fibers are cut when the rotating cutting blade 501 contacts the optical fibers to which the prestress is applied. After the cutting is completed, the motor 510 and the motor 506 rotate in the reverse direction, so that each component is reset; the spring 515 is restored to the original length; and then the second moving part 502 is separated from the second fixed part 503. The motor 506 drives the gear rack 505 via the gear 507 to fully withdraw the second machine frame 511 from the cutting position, leaving it to the first clamping part 3, which facilitates the feeding of the optical fibers into the fusion splicing part 7.

The fusion splicing part 7 is the same as or similar to the fusion splicer of the prior art, and has a discharge electrode, a fine adjustment device, etc. In a specific embodiment, as shown in Fig. 6, the fusion splicing part 7 comprises a motor 701 for driving the opening and closing of a cover 707 by means of a transmission member; a pair of pressing plates 706 are mounted on the cover; and a pair of V-grooves 704 for placing the optical fibers corresponds to the pressing plates 706. The V-groove 704 is placed on a fine adjustment base 703 that can perform fine adjustment on the position of the V-groove 704 to ensure alignment of the fibers on both sides. A camera 702 and a camera 705 are also provided beside the V-groove 704 for observing the position of the optical fiber. When the optical fibers are fed into the fusion splicing part 7 from the first clamping part 3, the cover 707 is closed; and the pressing plate 706 presses the optical fibers into the V-groove; and after fine adjustment of the position of the optical fibers, electric discharge fusion splicing can be performed by an electrode (not shown).

In the above embodiment, since the first clamping part and the cutting part are arranged symmetrically with respect to the fusion splicing part 7, or the structure and operation principle of the first clamping part and the cutting part on both sides are the same or similar, only the structure and operation principle of one side are described, and the structure and operation principle of the component on the other side are the same or similar to those described above.

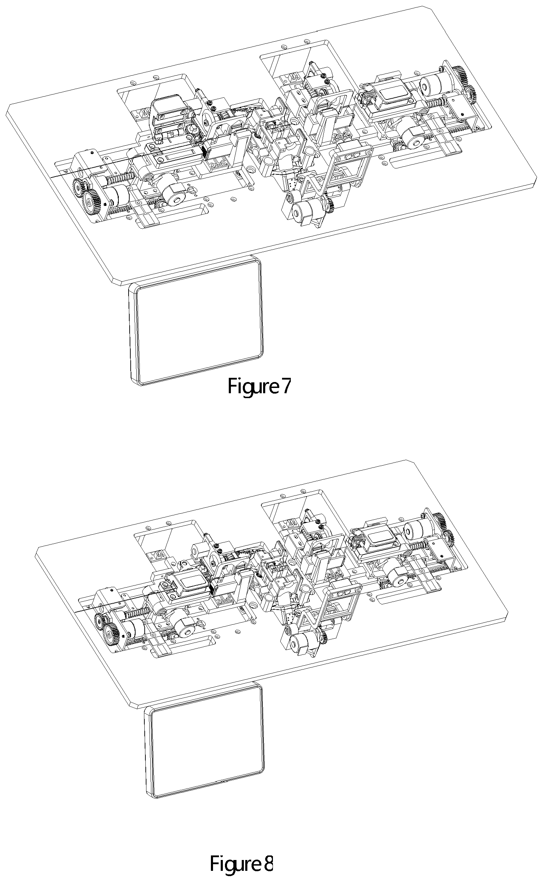

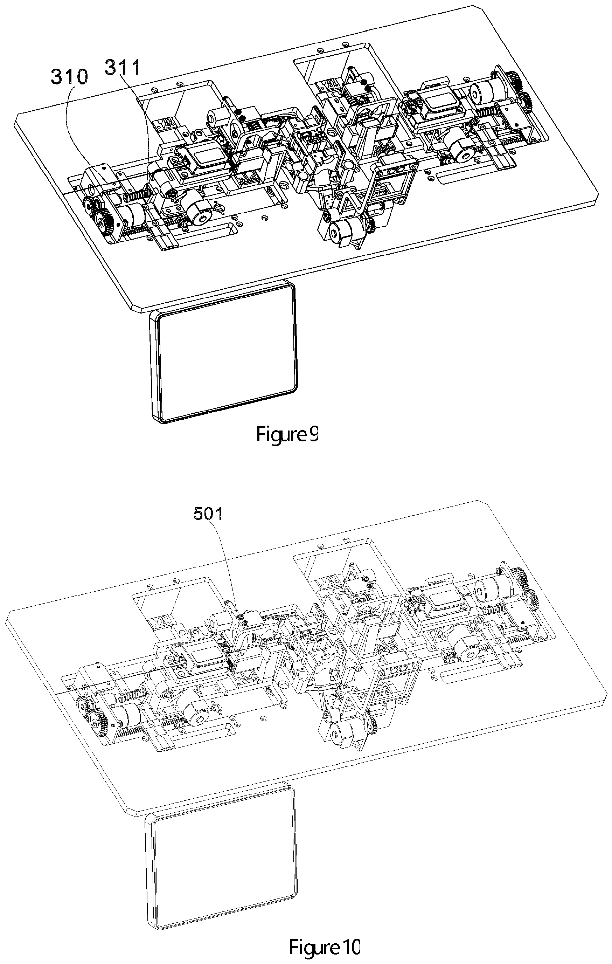

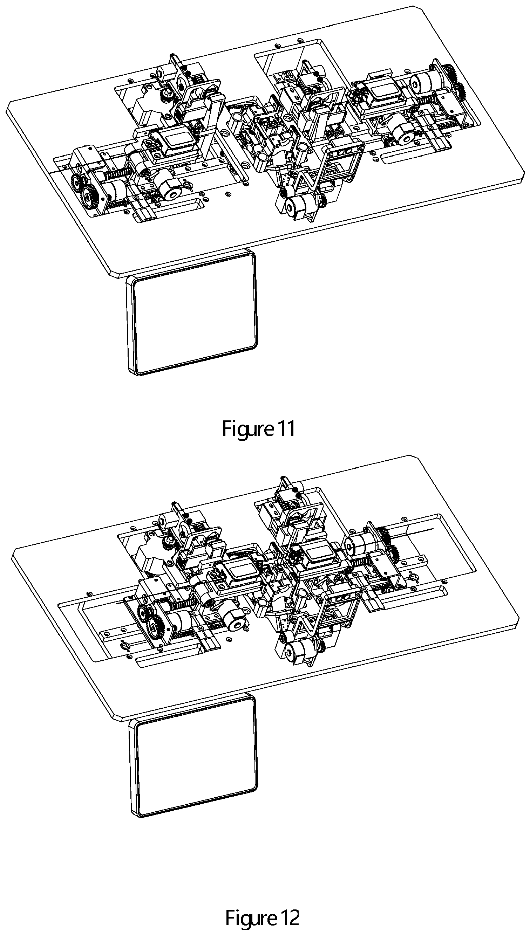

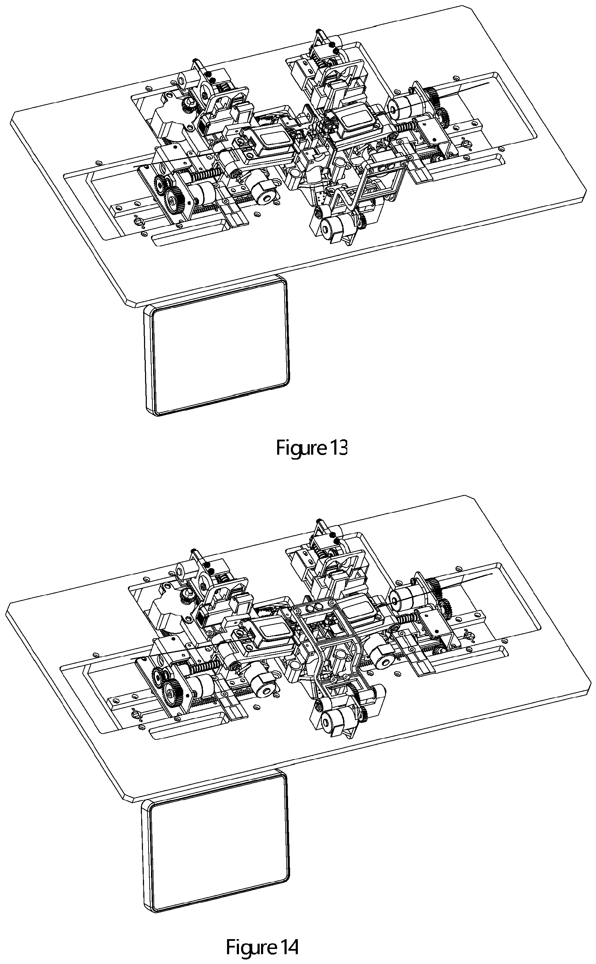

The operation of the optical fiber fusion splicer according to the embodiment of the present invention will be further described with reference to Figs. 7 to 15. First, the coating layer on the both ends of the optical fiber to be spliced is stripped by a length, wiped with alcohol, and then respectively put into the first clamping parts 3 and 4 of the optical fiber fusion splicer, as shown in Fig. 7. After the optical fibers are put in, the first clamping parts on both sides are snapped together; and after the sensor receives the snapping signal, the cutting parts 5 and 6 are driven to move, and the second clamping part clamps the optical fibers, as shown in Fig. 8. After the second clamping part clamps the optical fibers, the motor drives the first clamping part to retreat; the rod 311 compresses the spring; a gap occurs between the rod 311 and the lead screw 310; and the first clamping part and the second clamping part cooperate to tension the optical fibers, and the spring provides tensile stress, as shown in Fig. 9. After tightening the fiber, the cutting blade 501 in the cutting part continues to approach the fibers as it rotates about its own axis, thereby cutting the fibers and making a good cut, as shown in Fig. 10. After the cutting is completed, the cutting part is withdrawn from a position between the first clamping part and the fusion splicing part, as shown in Fig. 11. Subsequently, the first clamping part is fed towards the fusion splicing part, and the optical fibers will enter above the fusion splicing area, as shown in Fig. 12. After the optical fibers enter above the fusion splicing area, the first clamping part can adjust the included angle between the optical fiber and the horizontal plane by means of the cam transmission mechanism in the above-mentioned embodiment (or other transmission mechanism known to a person skilled in the art, such as a stepper motor cooperating with a gear to adjust the rotation angle of the hinge shaft, or otherwise controlling the vertical height of the first clamping part), so that the optical fiber is placed in the V-groove, as shown in Fig. 13. Finally, when the adjustment of the first clamping part is completed, the cover of the fusion splicing part is pressed down, the fine adjustment base performs fine adjustment alignment on the optical fibers, and the electrode is discharged to complete the fusion splicing part of the optical fibers, as shown in Fig. 14. The above-mentioned position control can be realized by the cooperation of sensors and programmable controllers. A person skilled in the art would have been able to realize the arrangement of these sensors and the control relationship of the programmable controllers on the basis of the disclosure of the present invention.

On the basis of the above embodiment, in order to easily strip the coating layer on the optical fiber, an automatic fiber stripping device may be further mounted on the working platform. The automatic fiber stripping device can be any existing automatic fiber stripping device, such as disclosed in Chinese patent application for invention (publication number CN101943769A) or Chinese utility model CN207366782U, or a device well known to those skilled in the art.

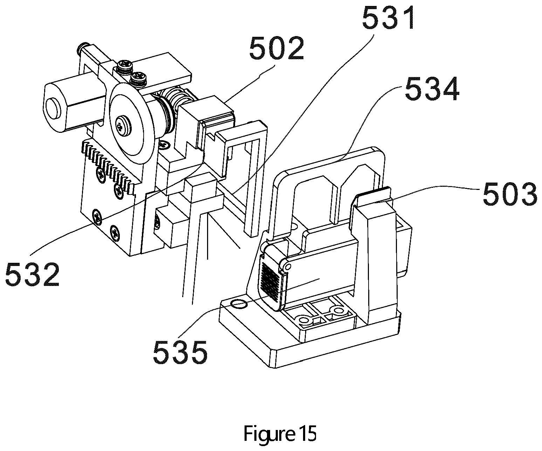

On the basis of the embodiment of the cutting part 5 shown in Fig. 2, in order to facilitate releasing the cut and waste optical fibers from the second moving part 502 or the second fixed part 503, a defibering component is further provided on the second moving part 502; and a second U-shaped frame 534 is fixedly connected to the second fixed part 503, as shown in Fig. 15. Here, the defibering part moving with the second moving part 502 includes a rod 531 extending towards the second fixed part 503 and a first U-shaped frame 532 extending from an end of the rod 531; and the first U-shaped frame 532 surrounds outside of the second fixed part 503. The rod 531 and the first U-shaped frame 532 are arranged such that, when the second moving part 502 contacts the second fixed part 503, the first U-shaped frame 532 is located behind the clamping surface of the second fixed part 503 (in a direction away from the second moving part 502); and when the second moving part 502 moves away from the second fixed part 503, the first U-shaped frame 532 moves along with the second moving part 502 and gradually moves to the front of the clamping surface of the second fixed part 503. The space enclosed by the second U-shaped frame 534 is slightly larger than that of the second moving part 502; and the second moving part 502 passes through the second U-shaped frame 534 during forward or backward movement. The movement of the first U-shaped frame 532 or the second U-shaped frame 534 relative to the second fixed part 503 or the second moving part 502 serves to push the optical fibers away from the clamping surface and down into a waste fiber box 535 below.

The above embodiments of the present invention are not intended to limit the present invention to these embodiments. Based on the described embodiments of the present invention, those skilled in the art can obtain other embodiments without inventive contribution, which are within the scope of legal protection obtained by the present invention.

Moreover, all of the features, acts or treatments disclosed herein (unless the features and/or treatments are mutually exclusive) can be combined in any manner and in any possible combination.

## Claims

1. An optical fiber fusion splicer comprising a fusion splicing part (7), wherein the fusion splicing part (7) can splice optical fibers, wherein the optical fiber fusion splicer further comprises:
a first clamping part (3, 4) respectively provided on either side of the fusion splicing part (7), wherein the first clamping parts (3, 4) can clamp optical fibers and move in the lengthwise direction of the optical fibers;
a cutting part (5, 6) respectively provided on either side of the fusion splicing part (7), wherein the cutting parts (5, 6) is arranged between the first clamping parts (3, 4) and the fusion splicing part (7) and provided with cutting blades (501) suitable to cut optical fibers and second clamping parts;
the second clamping parts are arranged between the cutting blades (501) and the fusion splicing part (7);
wherein the cutting parts (5, 6) can move, so that the cutting parts (5,6) withdraw from positions between the first clamping parts (3, 4) and the fusion splicing part (7), **characterized in that** the optical fiber fusion splicer comprising a working platform (1) and the fusion splicing part (7) provided on the working platform (1), and the second clamping part of each of the cutting parts (5, 6) comprises a second fixed part (503) and a second moving part (502), wherein each of the cutting parts (5, 6) is provided with a driving part, which drives the cutting blade (501) to move towards or away from the second fixed part (503); the cutting blade (501) is connected to the second moving part via an elastic part; when the elastic part is in an extended state, the second moving part (502) is closer to the position where the optical fiber is located than the cutting blade (501); and when the elastic part is compressed and contracted as the second moving part (502) is in contact with the second fixed part (503), the cutting blade (501) can continue to move towards the position where the optical fiber is located so as to contact the optical fiber.

2. The optical fiber fusion splicer according to claim 1, **characterized in that** the direction of movement of the cutting part (5, 6) is perpendicular to the length direction of the optical fiber.

3. The optical fiber fusion splicer according to claim 1, **characterized in that** when the second clamping part clamps the optical fiber, the first clamping part (3, 4) moves in the direction away from the splicing part, so that the optical fiber stretches and a tensile stress is applied on the optical fiber; and then the cutting blade (501) moves to the position where the optical fiber is located for cutting.

4. The optical fiber fusion splicer according to claim 1, **characterized in that** the cutting blade (501) is in the shape of a disc, which is rotatable about the disc axis when driven by a motor (301).

5. The optical fiber fusion splicer according to claim 1, **characterized in that** the cutting part (5, 6) is mounted on a second machine frame (511) which is driven towards or away from the position of the optical fiber by a second driving component; and the second driving component has a greater feed rate than that of the driving component.

6. The optical fiber fusion splicer according to claim 4, **characterized in that** the motor (301) drives and rotates the cutting blade (501) via a belt pulley.

7. The optical fiber fusion splicer according to claim 5, **characterized in that** the driving component and the second driving component comprises a drive gear and a gear rack (315) cooperating therewith.

8. The optical fiber fusion splicer according to claim 1, **characterized in that** the first clamping (3, 4) part comprises a clamping element for clamping optical fibers;
a moving support on which the clamping element is mounted, wherein the moving support (306) can move towards or away from the fusion splicing part (7); and
a third driving component for driving the moving support (306) to move.

9. The optical fiber fusion splicer according to claim 8, **characterized in that** the clamping element can move towards or away from the fusion splicing part (7) with respect to the moving support (306); and an elastic element is provided between the clamping element and the moving support (306).

10. The optical fiber fusion splicer according to claim 8, **characterized in that** the clamping element can move towards or away from the fusion splicing part (7) with respect to the moving support (306); a fourth driving component for driving the clamping element to move is also fixed to the moving support; and the fourth driving component has a smaller feed rate than that of the third driving component.

11. The optical fiber fusion splicer according to claim 8, **characterized in that** the clamping element is mounted on the moving support by means of a sliding block; the clamping element is hinged on the sliding block; a fifth driving component and a cam (312) driven by the fifth driving component are further mounted on the sliding block; the cam (312) is in contact with a lower surface of the clamping element; and a return spring is further mounted between the clamping element and the sliding block.

12. The optical fiber fusion splicer according to claim 8, **characterized in that** the clamping element is mounted on the moving support (306) by the sliding block; an elastic element is provided between the sliding block and the moving support (306); a fourth driving component for driving the movement of the sliding block is further fixed on the moving support (306); the fourth driving component has a smaller feeding rate than that of the third driving component; and the fourth driving component can be in contact with or separated from the sliding block and is used for driving the movement of the sliding block when the fourth driving component is in contact with the sliding block.

13. The optical fiber fusion splicer according to claim 12, **characterized in that** the fourth driving component comprises a motor (301) and a lead screw transmission mechanism driven by the motor (301); and a free end of the lead screw transmission mechanism can come into contact with the sliding block.

14. The fiber fusion splicer according to claim 1, **characterized in that** an automatic fiber stripping device is further mounted on the working platform.

15. The optical fiber fusion splicer according to claim 1, **characterized in that** the driving component for the first clamping part, the cutting part and the fusion splicing part (7) are a stepper motor (309); a control end of the stepper motor (309) is connected to a microprocessor that is suitable to perform the following steps:
clamping the optical fibers by the second clamping part;
moving the first clamp part by a predetermined distance in a direction away from the fusion splicing part (7);
feeding the cutting blade (501) to cut the optical fibers;
moving the cutting part (5, 6) out between the first clamping part (3, 4) and the fusion splicing part (7);
feeding by the first clamping (3, 4) part to place the cut optical fibers into the fusion splicing part (7); and
performing optical fiber position adjustment and fusion splicing by the fusion splicing part (7).

16. The optical fiber fusion splicer according to claim 1, **characterized in that** a second U-shaped frame is provided on the second fixed part; a first U-shaped frame is provided on the second moving part; the first U-shaped frame and the second U-shaped frame are arranged such that the clamping surface of a second moving component can pass through the second U-shaped frame and the first U-shaped frame can pass through the clamping surface of the second fixed part when the second moving component moves.

## Patentansprüche

1. Glasfaserfusionsspleißer umfassend ein Fusionsspleißteil (7), wobei das Fusionsspleißteil (7) Glasfasern spleißen kann, wobei der Glasfaserfusionsspleißer ferner umfasst:
ein erstes Klemmteil (3, 4), das jeweils auf beiden Seiten des Fusionsspleißteils (7) angeordnet ist, wobei die ersten Klemmteile (3, 4) Glasfasern einklemmen und sich in der Längsrichtung der Glasfasern bewegen können;
ein Schneidteil (5, 6), das jeweils auf beiden Seiten des Fusionsspleißteils (7) angeordnet ist, wobei die Schneidteile (5, 6) zwischen den ersten Klemmteilen (3, 4) und dem Fusionsspleißteil (7) angeordnet sind und mit Schneidklingen (501), die zum Schneiden von Glasfasern geeignet sind, und zweiten Klemmteilen versehen sind;
die zweiten Klemmteile zwischen den Schneidklingen (501) und dem Fusionsspleißteil (7) angeordnet sind;
wobei die Schneidteile (5, 6) beweglich sind, so dass die Schneidteile (5, 6) sich aus Positionen zwischen den ersten Klemmteilen (3, 4) und dem Fusionsspleißteil (7) zurückziehen, **dadurch gekennzeichnet, dass** der Glasfaserfusionspleißer eine Arbeitsplattform (1) und das auf der Arbeitsplattform (1) angeordnete Fusionsspleißteil (7) umfasst, und das zweite Klemmteil jedes der Schneidteile (5, 6) ein zweites festes Teil (503) und ein zweites bewegliches Teil (502) umfasst, wobei jedes der Schneidteile (5, 6) mit einem Antriebsteil versehen ist, das die Schneidklinge (501) antreibt, um sich zu dem zweiten festen Teil (503) hin oder von ihm weg zu bewegen; wobei die Schneidklinge (501) mit dem zweiten beweglichen Teil über ein elastisches Teil verbunden ist; wenn sich das elastische Teil in einem ausgefahrenen Zustand befindet, ist das zweite bewegliche Teil (502) näher an der Position, an der sich die Glasfaser befindet, als die Schneidklinge (501); und wenn das elastische Teil zusammengedrückt und zusammengezogen wird, während das zweite bewegliche Teil (502) in Kontakt mit dem zweiten festen Teil (503) ist, kann sich die Schneidklinge (501) weiter zu der Position bewegen, an der sich die Glasfaser befindet, um die Glasfaser zu berühren.

2. Glasfaserfusionsspleißer nach Anspruch 1, **dadurch gekennzeichnet, dass** die Bewegungsrichtung des Schneidteils (5, 6) senkrecht zur Längsrichtung der Glasfaser verläuft.

3. Glasfaserfusionsspleißer nach Anspruch 1, **dadurch gekennzeichnet, dass**, wenn das zweite Klemmteil die Glasfaser einklemmt, sich das erste Klemmteil (3, 4) in die Richtung weg von dem Spleißteil bewegt, so dass sich die Glasfaser dehnt und eine Zugspannung auf die Glasfaser ausgeübt wird; und dann bewegt sich die Schneidklinge (501) zu der Position, an der die Glasfaser zum Schneiden angeordnet ist.

4. Glasfaserfusionsspleißer nach Anspruch 1, **dadurch gekennzeichnet, dass** die Schneidklinge (501) die Form einer Scheibe hat, die um die Scheibenachse drehbar ist, wenn sie von einem Motor (301) angetrieben wird.

5. Glasfaserfusionsspleißer nach Anspruch 1, **dadurch gekennzeichnet, dass** das Schneidteil (5, 6) auf einem zweiten Maschinenrahmen (511) angeordnet ist, der durch eine zweite Antriebskomponente zur Position der Glasfaser hin oder von ihr weg angetrieben wird; und die zweite Antriebskomponente einen größeren Vorschub als die Antriebskomponente aufweist.

6. Glasfaserfusionsspleißer nach Anspruch 4, **dadurch gekennzeichnet, dass** der Motor (301) das Schneidmesser (501) über eine Riemenscheibe antreibt und dreht.

7. Glasfaserfusionsspleißer nach Anspruch 5, **dadurch gekennzeichnet, dass** die Antriebskomponente und die zweite Antriebskomponente ein Antriebsrad und eine damit zusammenwirkende Zahnstange (315) umfasst.

8. Glasfaserfusionsspleißer nach Anspruch 1, **dadurch gekennzeichnet, dass** das erste Klemmteil (3, 4) umfassend ein Klemmelement zum Klemmen von Glasfasern;
eine bewegliche Halterung, an der das Klemmelement angeordnet ist, wobei sich die bewegliche Halterung (306) zu dem Fusionsspleißteil (7) hin oder von ihm weg bewegen kann; und
eine dritte Antriebskomponente, um den beweglichen Träger (306) zu bewegen.

9. Glasfaserfusionsspleißer nach Anspruch 8, **dadurch gekennzeichnet, dass** sich das Klemmelement in Bezug zu der beweglichen Halterung (306) auf das Fusionsspleißteil (7) zu oder von diesem weg bewegen kann; und ein elastisches Element zwischen dem Klemmelement und der beweglichen Halterung (306) angeordnet ist.

10. Glasfaserfusionsspleißer nach Anspruch 8, **dadurch gekennzeichnet, dass** sich das Klemmelement in Bezug zu der beweglichen Halterung (306) auf das Fusionsspleißteil (7) zu oder von ihm weg bewegen kann; eine vierte Antriebskomponente zum Bewegen des Klemmelements ebenfalls an der beweglichen Halterung befestigt ist; und die vierte Antriebskomponente einen geringeren Vorschub als die dritte Antriebskomponente aufweist.

11. Glasfaserfusionsspleißer nach Anspruch 8, **dadurch gekennzeichnet, dass** das Klemmelement mittels eines Gleitblocks an der beweglichen Halterung angebracht ist; das Klemmelement an dem Gleitblock gelenkig angeordnet ist; eine fünfte Antriebskomponente und eine von der fünften Antriebskomponente angetriebener Nocken (312) ferner an dem Gleitblock angeordnet sind; der Nocken (312) in Kontakt mit einer unteren Fläche des Klemmelements steht; und eine Rückholfeder ferner zwischen dem Klemmelement und dem Gleitblock angeordnet ist.

12. Glasfaserfusionsspleißer nach Anspruch 8, **dadurch gekennzeichnet, dass** das Klemmelement durch den Gleitblock an der beweglichen Halterung (306) angeordnet ist; ein elastisches Element zwischen dem Gleitblock und der beweglichen Halterung (306) angeordnet ist; eine vierte Antriebskomponente zum Antreiben der Bewegung des Gleitblocks ferner an der beweglichen Halterung (306) befestigt ist; die vierte Antriebskomponente hat einen geringeren Vorschub als die dritte Antriebskomponente; und die vierte Antriebskomponente kann in Kontakt mit dem Gleitstein sein oder von diesem getrennt sein und wird zum Antrieb der Bewegung des Gleitsteins verwendet, wenn die vierte Antriebskomponente in Kontakt mit dem Gleitstein ist.

13. Glasfaserfusionsspleißer nach Anspruch 12, **dadurch gekennzeichnet, dass** die vierte Antriebskomponente einen Motor (301) und einen durch den Motor (301) angetriebenen Leitspindelübertragungsmechanismus umfasst; und ein freies Ende des Leitspindelübertragungsmechanismus mit dem Gleitblock in Kontakt kommen kann.

14. Glasfaserfusionsspleißer nach Anspruch 1, **dadurch gekennzeichnet, dass** auf der Arbeitsplattform ferner eine automatische Faserabisoliervorrichtung angeordnet ist.

15. Glasfaserfusionsspleißer nach Anspruch 1, **dadurch gekennzeichnet, dass** die Antriebskomponente für das erste Klemmteil, das Schneidteil und das Fusionsspleißteil (7) ein Schrittmotor (309) ist; ein Steuerende des Schrittmotors (309) ist mit einem Mikroprozessor verbunden, der geeignet ist, die folgenden Schritte durchzuführen:
Einklemmen der Glasfasern durch das zweite Klemmteil;
Bewegen des ersten Klemmteils um eine vorbestimmte Strecke in eine Richtungwegvon dem Fusionsspleißteil (7);
Zuführen der Schneidklinge (501) zum Schneiden der Glasfasern;
Herausbewegen des Schneidteils (5, 6) zwischen dem ersten Klemmteil (3, 4) und dem Fusionsspleißteil (7);
Zuführung durch das erste Klemmteil (3, 4), um die geschnittenen Glasfasern in das Fusionsspleißteil (7) zu legen; und
Ausführen der Positionseinstellung der Glasfasern und des Schmelzspleißens durch das Fusionsspleißteil (7).

16. Glasfaserfusionsspleißer nach Anspruch 1, **dadurch gekennzeichnet, dass** ein zweiter U-förmiger Rahmen an dem zweiten feststehenden Teilangeordnet ist; ein erster U-förmiger Rahmen an dem zweiten beweglichen Teil vorgesehen ist; der erste U-förmige Rahmen und der zweite U-förmige Rahmen so angeordnet sind, dass die Klemmfläche einer zweiten beweglichen Komponente durch den zweiten U-förmigen Rahmen hindurchgehen kann und der erste U-förmige Rahmen durch die Klemmfläche des zweiten feststehenden Teils hindurchgehen kann, wenn sich die zweite bewegliche Komponente bewegt.

## Revendications

1. Dispositif d'epissage par fusion de fibres optiques comprenant une pièce d'épissage par fusion (7), dans laquelle la pièce d'épissage par fusion (7) peut épisser des fibres optiques, dans lequel l'épisseur par fusion de fibres optiques comprend en outre:
une première pièce de serrage (3, 4) respectivement prévue de chaque côté de la pièce d'épissage par fusion (7), dans laquelle les premières pièces de serrage (3, 4) peuvent serrer les fibres optiques et se déplacer dans le sens de la longueur des fibres optiques;
une pièce coupante (5, 6) respectivement prévue de chaque côté de la pièce d'épissage par fusion (7), dans laquelle les pièces coupantes (5, 6) sont disposées entre les premières pièces de serrage (3, 4) et la pièce d'épissage par fusion (7) et sont pourvues de lames de coupe (501) adapté à couper les fibres optiques et deuxièmes pièces de serrage;
les deuxièmes pièces de serrage sont disposées entre les lames de coupe (501) et la pièce d'épissure par fusion (7);
dans lequel les pièces de coupe (5, 6) peuvent se déplacer, de sorte que les pièces de coupe (5, 6) se retirent des positions entre les premières pièces de serrage (3, 4) et la pièce d'épissure par fusion (7), **caractérisé en ce que** la dispositif d'epissage par fusion de fibres optiques comprend une plate-forme de travail (1) et la pièce d'épissure par fusion (7) prévue sur la plate-forme de travail (1), et la deuxième pièce de serrage de chacune des pièces de coupe (5, 6) comprend une deuxième pièce fixe (503) et une deuxième pièce mobile (502), dans laquelle chacune des pièces de coupe (5, 6) est dotée d'une pièce motrice qui entraîne la lame de coupe (501) à se rapprocher ou à s'éloigner de la deuxième pièce fixe (503) ; la lame de coupe (501) est reliée à la deuxième pièce mobile par une pièce élastique ; lorsque la pièce élastique est étendue, la deuxième pièce mobile (502) est plus proche de la position où se trouve la fibre optique que la lame de coupe (501) ; et lorsque la pièce élastique est comprimée et contractée alors que la deuxième pièce mobile (502) est en contact avec la deuxième pièce fixe (503), la lame de coupe (501) peut continuer à se déplacer vers la position où se trouve la fibre optique de manière à entrer en contact avec la fibre optique.

2. Dispositif d'epissage par fusion de fibres optiques selon la revendication 1, **caractérisé en ce que** la direction de mouvement de la pièce coupante (5, 6) est perpendiculaire à la direction de la longueur de la fibre optique.

3. Dispositif d'epissage par fusion de fibres optiques selon la revendication 1, **caractérisé en ce que** lorsque la deuxième pièce de serrage serre la fibre optique, la première pièce de serrage (3, 4) se déplace dans la direction opposée à la pièce d'épissage, de sorte que la fibre optique s'étire et qu'une contrainte de traction est appliquée sur la fibre optique ; puis la lame de coupe (501) se déplace à la position où la fibre optique est située pour la coupe.

4. Dispositif d'epissage par fusion de fibres optiques selon la revendication 1, **caractérisé en ce que** la lame de coupe (501) a la forme d'un disque, qui est rotatif autour de l'axe du disque lorsqu'il est entraîné par un moteur (301).

5. Dispositif d'epissage par fusion de fibres optiques selon la revendication 1, **caractérisé en ce que** la pièce de coupe (5, 6) est montée sur un second châssis de machine (511) qui est entraîné vers ou loin de la position de la fibre optique par un second composant d'entraînement ; et le second composant d'entraînement a une vitesse d'avance plus grande que celle du composant d'entraînement.

6. Dispositif d'epissage par fusion de fibres optiques selon la revendication 4, **caractérisé par le fait que** le moteur (301) entraîne et fait tourner la lame de coupe (501) par l'intermédiaire d'une poulie à courroie.

7. Dispositif d'epissage par fusion de fibres optiques selon la revendication 5, **caractérisé en ce que** le composant d'entraînement et le second composant d'entraînement comprennent un engrenage d'entraînement et une crémaillère (315) coopérant avec lui.

8. Dispositif d'epissage par fusion de fibres optiques selon la revendication 1, **caractérisé en ce que** la première pièce de serrage (3, 4) comprend un élément de serrage pour le serrage de fibres optiques ;
un support mobile sur lequel l'élément de serrage est monté, le support mobile (306) pouvant se rapprocher ou s'éloigner de la pièce d'épissage par fusion (7); et
un troisième composant d'entraînement pour entraîner le déplacement du support mobile (306).

9. Dispositif d'epissage par fusion de fibres optiques selon la revendication 8, **caractérisé en ce que** l'élément de serrage peut se rapprocher ou s'éloigner de la pièce d'épissage par fusion (7) par rapport au support mobile (306) ; et un élément élastique est fourni entre l'élément de serrage et le support mobile (306).

10. Dispositif d'epissage par fusion de fibres optiques selon la revendication 8, **caractérisé en ce que** l'élément de serrage peut se rapprocher ou s'éloigner de la pièce d'épissage par fusion (7) par rapport au support mobile (306) ; un quatrième composant d'entraînement pour entraîner le déplacement de l'élément de serrage est également fixé au support mobile ; et le quatrième composant d'entraînement a une vitesse d'avance plus petite que celle du troisième composant d'entraînement.

11. Dispositif d'epissage par fusion de fibres optiques selon la revendication 8, **caractérisé en ce que** l'élément de serrage est monté sur le support mobile au moyen d'un bloc coulissant ; l'élément de serrage est articulé sur le bloc coulissant ; un cinquième composant d'entraînement et une came (312) entraînée par le cinquième composant d'entraînement sont également montés sur le bloc coulissant ; la came (312) est en contact avec une surface inférieure de l'élément de serrage ; et un ressort de rappel est en outre monté entre l'élément de serrage et le bloc coulissant.

12. Dispositif d'epissage par fusion de fibres optiques selon la revendication 8, **caractérisé en ce que** l'élément de serrage est monté sur le support mobile (306) par le bloc coulissant ; un élément élastique est prévu entre le bloc coulissant et le support mobile (306) ; un quatrième composant d'entraînement pour entraîner le mouvement du bloc coulissant est en outre fixé sur le support mobile (306) ; le quatrième composant d'entraînement a une vitesse d'alimentation inférieure à celle du troisième composant d'entraînement ; et le quatrième composant d'entraînement peut être en contact ou séparé du bloc coulissant et est utilisé pour entraîner le mouvement du bloc coulissant lorsque le quatrième composant d'entraînement est en contact avec le bloc coulissant.

13. Dispositif d'epissage par fusion de fibres optiques selon la revendication 12, **caractérisé en ce que** le quatrième composant d'entraînement comprend un moteur (301) et un mécanisme de transmission à vis sans fin entraîné par le moteur (301) ; et une extrémité libre du mécanisme de transmission à vis sans fin peut entrer en contact avec le bloc coulissant.

14. Dispositif d'epissage par fusion de fibres optiques selon la revendication 1, **caractérisé par le fait qu'**un dispositif de dénudage automatique des fibres est également monté sur la plate-forme de travail.

15. Dispositif d'epissage par fusion de fibres optiques selon la revendication 1, **caractérisé en ce que** le composant d'entraînement pour la première pièce de serrage, la pièce de coupe et la pièce d'épissage par fusion (7) est un moteur pas à pas (309) ; une extrémité de commande du moteur pas à pas (309) est connectée à un microprocesseur qui est apte à effectuer les étapes suivantes :
serrer les fibres optiques à l'aide de la deuxième pièce de serrage ;
déplacer la première pièce de serrage d'une distance prédéterminée dans une direction éloignée de la pièce d'épissage par fusion (7) ;
alimentation de la lame de coupe (501) pour couper les fibres optiques ;
déplacer la pièce coupante (5, 6) entre la première pièce de serrage (3, 4) et la pièce d'épissage par fusion (7) ;
l'alimentation par la première pièce de serrage (3, 4) pour placer les fibres optiques coupées dans la pièce d'épissage par fusion (7) ; et
l'ajustement de la position des fibres optiques et l'épissage par fusion par la pièce d'épissage par fusion (7).

16. Dispositif d'epissage par fusion de fibres optiques selon la revendication 1, **caractérisé en ce qu'**un second cadre en forme de U est fourni sur la seconde pièce fixe ; un premier cadre en forme de U est fourni sur la seconde pièce mobile ; le premier cadre en forme de U et le second cadre en forme de U sont disposés de telle sorte que la surface de serrage d'un second composant mobile peut passer à travers le second cadre en forme de U et que le premier cadre en forme de U peut passer à travers la surface de serrage de la seconde pièce fixe lorsque le second composant mobile se déplace.
